# EUROPEAN PATENT APPLICATION

(11) **EP 3 663 623 A1**
(43) Date of publication of application: **10.06.2020**
(21) Application number: 18210543.7
(22) Date of filing: 05.12.2018
(51) Int. Cl.: F16L 13/06, B29C 65/00, G01N 30/60

(54) **PRESSURE STABILIZER**

(71) Applicant: Bayer AG, 51373 Leverkusen (DE)
(72) Inventor: The designation of the inventor has not yet been filed
(74) Representative: BIP Patents

(57) **Abstract**

Herein is described a pressure resistant shell 1 for stabilizing a welding seam 1 of a weldable tubing 8 as well as a method of using it.

## Description

In biotechnological production, proteins are usually purified in batches. This means that the individual production cycles are handled discontinuously in a batchwise manner, with the entire product being removed after completion of a production cycle. To produce again, it is then necessary to start a separate new product cycle/ batch.

However, the highly regulated pharmaceutical production requires great effort in terms of time, technology and personnel to provide cleaned and sterilized bioreactors and to ensure a sterile product. To reliably avoid cross-contamination in the event of a product changeover in a multipurpose system or between two product batches, what is required apart from cleaning is a very complex cleaning validation, which, if applicable, must be repeated in the event of a process adaptation.

Therefore alternative production processes have been tested and in recent years, it has been demonstrated that biotechnological production can also be performed continuously, where the process runs without interruptions (cf. WO2016177650A1, Klutz et al. 2015). In this continuous process, the purification of proteins is performed over a relatively long period of time, preferably without sterilization and/or cleaning steps during the purification. Thus, the process needs to run under pathogen-reduced or even sterile conditions. In order to maintain this pathogen reduced or even sterile conditions the process has to be closed.

In order to maintain a closed process components which have to be repeatedly exchanged during the running production process e.g. filters, need to be replaced in a sterile manner. This can for example be achieved using the Sartorius Stedim Biowelder, which is designed for aseptically welding tubings. These tubings have been validated by Sartorius to a maximum operating pressure of 1 bar. In other words production processes using these tubings can be validated for pressures up to 1 bar. Validation is necessary in order to obtain regulatory approval which in turn is a prerequisite for commercial production. However, under production conditions the continuous process for purification of proteins is run at pressures between 1-5 bar, i.e. considerably above 2,5 bar. Hence welding seams with a pressure stability of more than 2,5 bar and especially at more than 2,8 bar are required or an alternative method for repeatedly exchanging components while maintaining the closed state in a process operated at more than 2,5 bar and especially at more than 2,8 bar is needed.

For the first time it was surprisingly found that these objectives can be met by a pressure resistant shell for stabilizing a welding seam of a weldable tubing, wherein
a) the pressure resistant shell comprises either at least two components characterized in that one component comprises a groove and the other an elevation which fits the groove or
b) the pressure resistant shell consists of at least one barblock device that secures a welding seam of a weldable tubing

Thus, said pressure resistant shell has the advantage that it stabilizes the welding seam, i.e. the part of the weldable tubing most sensitive to pressure thereby minimizing the risk of loss of the closed state via tube breakage.

Moreover, said pressure resistant shell has the advantage that because of the tight fit of the parts of the barblock device or because of the at least two components characterized in that one component comprises a groove and the other an elevation which fits the groove no twisting of the at least two components occurs and the two components maintain their position relative to each other and relative to the weldable tubing.

In addition said pressure resistant shell comprising at least two components characterized in that one component comprises a groove and the other an elevation which fits the groove has the advantage that due to the at least two components the pressure resistant shell can be easily removed from the weldable tubing and easily replaced onto the weldable tubing at any time.

To a skilled person it is clear that the pressure resistant shell comprising at least two components characterized in that one component comprises a groove and the other an elevation which fits the groove can comprise more than two components for example three or more components which also fit to each other thereby stabilizing the welding seam and preventing twisting of the pressure resistant shell.

Moreover, to a skilled person it is clear that both variants of the pressure resistant shells can be used in combination. Hence, if more than one welding seam of a weldable tubing needs to be secured either more than one pressure resistant shell wherein the pressure resistant shell comprises at least two components characterized in that one component comprises a groove and the other an elevation which fits the groove or more than one pressure resistant shell consisting of at least one barblock device are used or a combination of at least one pressure resistant shell comprising at least two components characterized in that one component comprises a groove and the other an elevation which fits the groove and at least one pressure resistant shell consisting of at least one barblock device is used.

As used herein the term "pressure resistant" refers to the fact that the pressure resistant shell can withstand pressure that exceed the maximum operating pressure of the respective tubing an especially a weldable tubing without altering its shape and especially without alteration of its inner diameter which stabilizes the welding seam of the weldable tubing. The maximum operating pressure of the respective tubing is usually given by the manufacturer of a given tubing, e.g. in the case of a Masterflex BPT LS24 tubing the manufacturer Masterflex specifies a maximum pressure of 2,7 bar. Alternatively a skilled person knows how to deduce the maximum operating pressurefrom burst tests, i.e. test determining the margin between the maximal working pressure and the pressure when the tubing completely fails (burst pressure).

As used herein the term "shell" used synonymously with "exoskeleton" refers to a device that encloses a welding seam of a weldable tubing.

Thus, if a weldable tubing is welded at several positions it can also comprise several pressure resistant shells. Moreover, a person skilled in the art can identify situations in which it is advantageous to employ pressure resistant shells along a weldable tubing at other positions than the welding seam.

In case of a pressure resistant shell consisting of a barblock device that secures a welding seam of a weldable tubing as many barblock devices as required for securing weldable seams while the closed process runs have to be placed onto the weldable tubing during assembly of the weldable tubing - i.e. usually during assembly of the single-use continuous production plant comprising the weldable tubing. Alternatively whenever a component is exchanged or a new component is added to the weldable tubing via aseptic welding additional pressure resistant shells consisting of barblock devices have to be added. This is the case as it is possible to move the barblock devices along the tubing but it is not possible to take a barblock device off a tubing or add it to an assembled tubing.

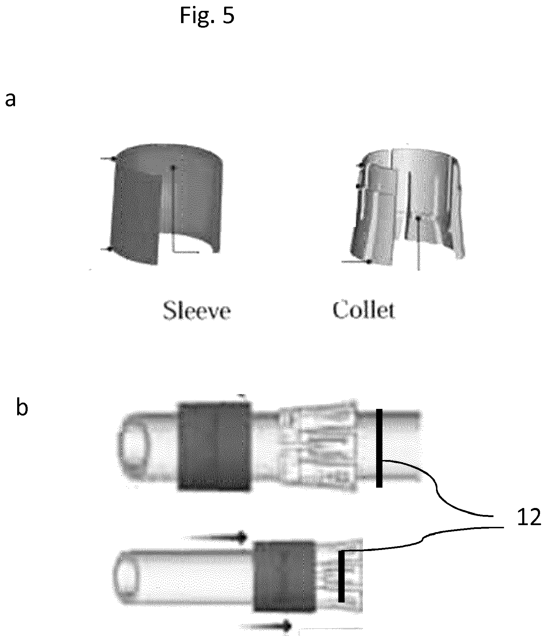

As used herein the term "barblock device" refers to a device consisting of a sleeve and a collet as provided by Saint-Gobain Performance Plastics (cf. Fig. 5)

Typical components that need to be exchanged in a sterile manner during the running closed process are filters, pumps, valves, bubble traps, pressure tanks, chromatography columns, membranes, membrane adsorbers and sensor e.g. for UV, pressure, pH, IR and conductivity.

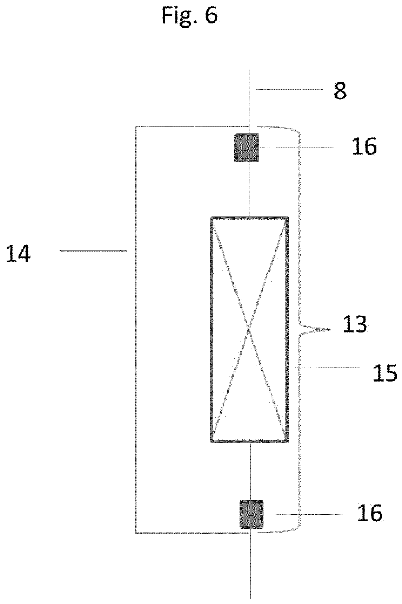

Moreover, if for example a chromatography column is to be exchanged it is preferred that after aseptically welding in the new chromatography column and securing the welding seam with a pressure resistant shell, gas bubbles which have potentially entered the system during the aseptic welding process are flushed out via a bypass pathway as depicted in Fig. 6. This approach ensures a gas bubble free and pressure stable connection of the new chromatography column.

In a preferred embodiment the tubing i.e. the weldable tubing that is to be welded during use is an aseptically weldable tubing, i.e. a weldable tubing welded under aseptic conditions.

As used herein the term "aseptically welded" refers to a connection technique of two components under sterile conditions e.g. using the Sartorius Stedim Biowelder.

Thus an aseptically welded tubing refers to a tubing which comprises a welding seam generated by aseptical welding. To a person skilled in the art it is clear that the pressure resistant shell described herein can also be used on a weldable tubing before an aseptic weld was generated or on a tubing that cannot be welded.

In one example the weldable tubing is a Masterflex BPT LS24 with an inner diameter of 6,4 mm and an outer diameter of 11,6 mm.

To a person skilled in the art it is clear that there can always be times where no pressure is applied to the tubing e.g. during set-up of a device comprising the weldable tubing or the tubing to be welded aseptically, respectively

In a preferred embodiment the at least two components of a pressure resistant shell characterized in that one component comprises a groove and the other an elevation which fits the groove are manufactured via 3-D printing, a molding process, machining techniques such as tension technologies, laser cutting, CAD (Computer aided design) / CNC (computerized numerical control) machine cutting and/or cutting of an existing surface. It is clear to a person skilled in the art that usually the least two components of the pressure resistant shell are manufactured using the same process but that there might be circumstances where one or more of the at least two components of the pressure resistant shell are manufactured using different processes.

In another preferred embodiment the at least two components of the pressure resistant shell characterized in that one component comprises a groove and the other an elevation which fits the groove are manufactured from materials selected from the group consisting of plastic preferably ABS - Acrylonitrile butadiene styrene, Polystyrol, Polyactide, Nylon, Polyvinylalcohol, Polypropylene, Polyethylene and PTFE, metal and glass. Again it is clear to a person skilled in the art that usually the least two components of the pressure resistant shell are manufactured from the same material but that there might be circumstances where one or more of the at least two components of the pressure resistant shell are manufactured from different materials.

As used herein the term "groove" refers to the term in the technical field of joinery, i.e. to a slot or trench cut, molded or formed into a material surface. A groove may be through, meaning that it passes all the way through the surface and its ends are open, or stopped, meaning that one or both of the ends finish before the groove meets edge of the surface.

As used herein the term "elevation that fits the groove" refers to the counterpart of the groove which projects from the one of the at least two components of the pressure resistant shell which comprises the elevation that fits the groove.

In a preferred embodiment the groove and the elevation that fits the groove hold via form closure.

Usually one of the at least two components of the pressure resistant shell characterized in that one component comprises a groove and the other an elevation which fits the groove comprises the groove and the other one comprises the elevation that fits the groove.

In a further preferred embodiment the pressure resistant shell characterized in that one component comprises a groove and the other an elevation which fits the groove is additionally spatially fixed in relation to the aseptically weldable tubing via a cable tie, velcro fastener, adhesive bonding and/or any clamping device such as nut and bolt.

As used herein the term "closed" refers to both "functionally closed" as well as "completely closed".

As used herein the term "completely closed" means that the production plant is operated in such a way that the fluid stream is not exposed to the room environment. Materials, objects, buffers, and the like can be added from outside, wherein, however, this addition takes place in such a way that exposure of the fluid stream to the room environment is avoided.

The term "functionally closed" refers to a process that may be opened but is "rendered closed" by a cleaning, sanitization and/or sterilization that is appropriate or consistent with the process requirements, whether sterile, aseptic or low bioburden. These systems shall remain closed during production within the system. Examples include process vessels that may be CIP'd and SIP'd between uses. Non-sterile systems such as chromatography or some filtration systems may also be rendered closed in low bioburden operations if appropriate measures are taken during the particular system setup.

In one embodiment of the pressure resistant shell described above the weldable tubing or the aseptically weldable tubing is used at a pressure of between 1-5 bar, preferably between 2,5 - 3,5 bar, most preferably 2,8 bar.

To a person skilled in the art it is clear that the dimensions of the pressure resistant shell characterized in that one component comprises a groove and the other an elevation which fits the groove and especially the inner diameter depend on the employed weldable tubing. It is preferred that the pressure resistant shell fits tightly around the employed weldable tubing without squeezing it.

In a preferred embodiment the pressure resistant shell characterized in that one component comprises a groove and the other an elevation which fits the groove is between 0,5 - 15 cm, preferably between 1-5 cm and most preferred 1 cm long, with an wall thickness of the pressure resistant shell of between 0,2 and 2 cm preferably 0,6 cm and an inner diameter of between 10-13 mm, preferably 11,6 mm. In other words, in this case the pressure resistant shell was placed around a weldable tubing with an outer diameter of 11,6 mm and was hence designed to tightly fit this weldable tubing.

In a further embodiment of the pressure resistant shell described above the weldable tubing or the aseptically weldable tubing further comprises at least one spring encasing 90-100% of the weldable tubing when the spring is relaxed and 50-95% of the weldable tubing when the spring is compressed.

In an alternative embodiment of the pressure resistant shell described above the weldable tubing or the aseptically weldable tubing does not comprise a pressure resistant shell but only at least one spring encasing 90-100% of the weldable tubing when the spring is relaxed and 50-95% of the weldable tubing when the spring is compressed.

Both embodiments have the advantage that the spring can be placed onto the weldable tubing during the assembly of the weldable tubing - i.e. usually during assembly of the single-use continuous production plant comprising the weldable tubing - which is later on to be welded aseptically during the production process. Due to the characteristic of the spring that it can be compressed the piece of weldable tubing covered by the spring is accessible to aseptic welding when required, e.g. to exchange a component. After exchange of the component the spring is relaxed again and covers the welding seam.

Thus, the spring reliably stabilizes a weldable tubing, which is especially important if the weldable tubing is not constructed to withstand pressures between 1- 5 bar preferably pressures between 2,5 and 5 bar, thereby minimizing the risk of loss of the closed state via tube breakage, even at pressures between 2,5 and 5 bar.

In some embodiments the spring can reliably stabilize a portion of the aseptically weldable tubing in which repeated welding is required e.g. since components such as filters need to be replaced several times during a continuous production process. This is the case even through the risk that a welding seam ruptures increases with the number of welding seams present.

In an embodiment the at least one spring is manufactured from a material selected from the group consisting of metal, preferably stainless steel, plastics and epoxy compounds.

In order to pressure protect a given tubing either one spring in the relaxed state is as long as the part of the tubing that needs to be pressure protected or several springs in combination (i.e. their added lengths) in the relaxed state are as long as the part of the tubing that needs to be pressure protected.

To a person skilled in the art it is clear that the dimensions of the at least one spring and especially the inner diameter depend on the employed weldable tubing. It is preferred that the at least one spring fits tightly around the employed weldable tubing without squeezing it.

Moreover it is clear to a skilled person that instead of one spring several springs can be used along a given piece of tubing. In general a first spring in the relaxed state together with a pressure resistant shell and second spring in relaxed state on the other side of the pressure resistant shell is as long as the piece of tubing that needs to be pressure stabilized.

In one example the at least one spring was 100 cm long in the relaxed state and had an inner diameter of between 11,9 mm and 12,1 mm as in this example the weldable tubing was a Masterflex BPT LS24 with an inner diameter of 6.4 mm and an outer diameter of 11.6 mm.

The slope of the spring - i.e. the distance from one winding of the spring to the next - has to be large enough for to allow compression before and during (aseptic) welding and at the same time small enough to ensure stabilization of the welded tubing.

For example, since 15 cm weldable tubing is required for aseptic welding, in case of a weldable tubing with a length of 100 cm the slope is preferably in the range of between 1.1 mm and 10 mm.

In an especially preferred embodiment the spring was manufactured from 1.4310 stainless steel, with a wire thickness of 1 mm, an inner diameter of 12 mm (+/0.1mm tolerance) and a slope - of 4,2 mm. Said spring was 100 cm long.

In one embodiment the at least one spring is placed onto a tubing in front of a filter onto which a pressure is exerted during production of the protein of interest during assembly of the production plant. In a preferred embodiment a spring is placed onto each tubing in front of a filter onto which a pressure is exerted during production of the protein of interest during assembly of the production plant.

In one embodiment the at least one spring when relaxed covers the at least one pressure resistant shell. In an alternative embodiment the at least one spring covers the part of the weldable tubing not secured by at least one pressure resistant shell. In a third variant the at least one spring when relaxed covers the at least one pressure resistant shell as well as the part of the weldable tubing not secured by at least one pressure resistant shell.

It should be noted that a system for the continuous production of a protein of interest comprising at least one aseptically weldable tubing usually also comprises other types of tubings such as braided hoses or even stainless steel hoses. Nevertheless it is possible to manufacture a system only from weldable tubing.

In a further aspect of what is described herein at least one pressure resistant shell consisting of a barblock device is used for securing a welding seam of a weldable tubing.

### Figures

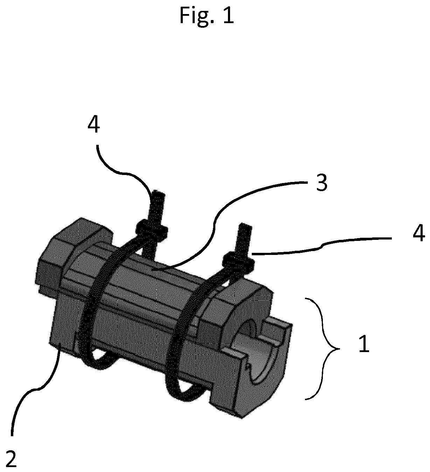

Figure 1 shows a schematic drawing of a pressure resistant shell (1) in this example consisting of a first component comprising a groove (2) and a second component comprising an elevation that fits the groove (3) and the two components are spatially fixed in relation to an aseptically weldable tubing (not shown) via two cable ties (4).

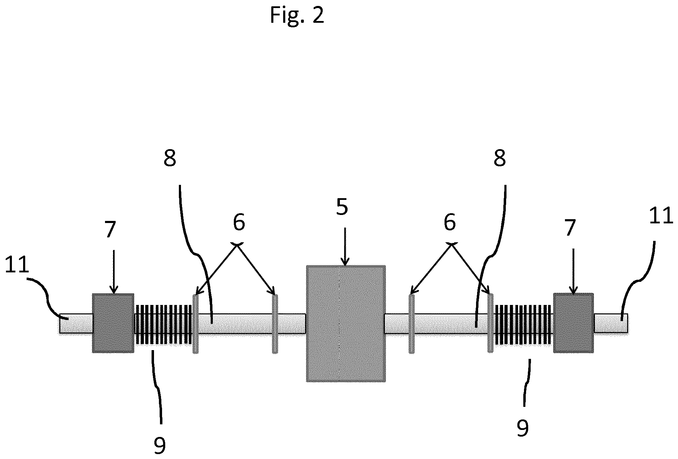

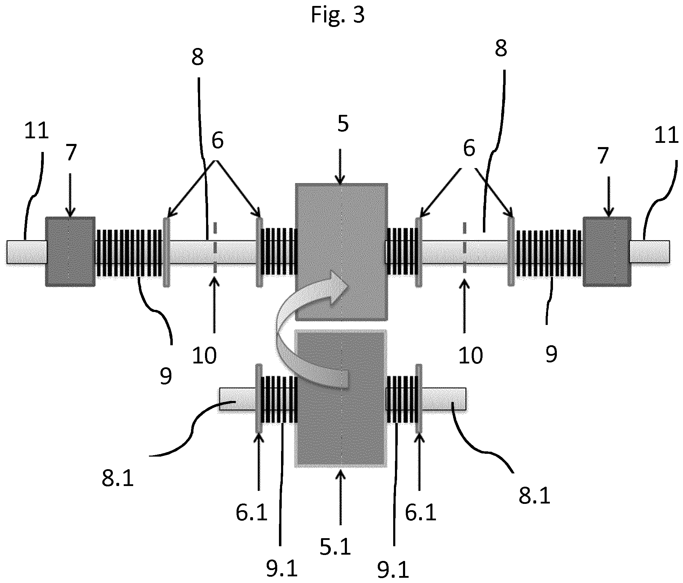

Figure 2 shows a schematic drawing of a weldable tubing (8) - here a Masterflex BPT LS24 - to be welded aseptically. In this case the tubing needs to be welded aseptically, since the filter (5) is to be replaced during the continuous production of a protein of interest under pathogen reduced conditions i.e. the closed state has to be maintained. Thus, in preparation for the aseptical welding springs (9) positioned adjacent to the filter (5) are compressed and fixed in the compressed state by hose clamps (6) thereby exposing the part of the weldable tubing to be welded aseptically. It should be noted that also right and left of the filter springs (9) are present, which are not shown in Fig. 2, but which are shown in Fig. 3. Connecting pieces (7) - here tube connectors secured with barblock retainers - link the weldable tubing to a non-weldable tubing (11) in this example a braided hose.
Figure 3 shows a schematic drawing of the setting of Figure 2 one step further during the process of aseptic welding. In detail the weldable tubing (8) is sealed off and cut at two positions (10) right and left of the filter (5) and exchanged for a new piece of tubing (8.1) comprising a new filter (5.1), new springs 9.1 right and left of the filter and two new hose clamps (6.1) using a Biowelder TC.

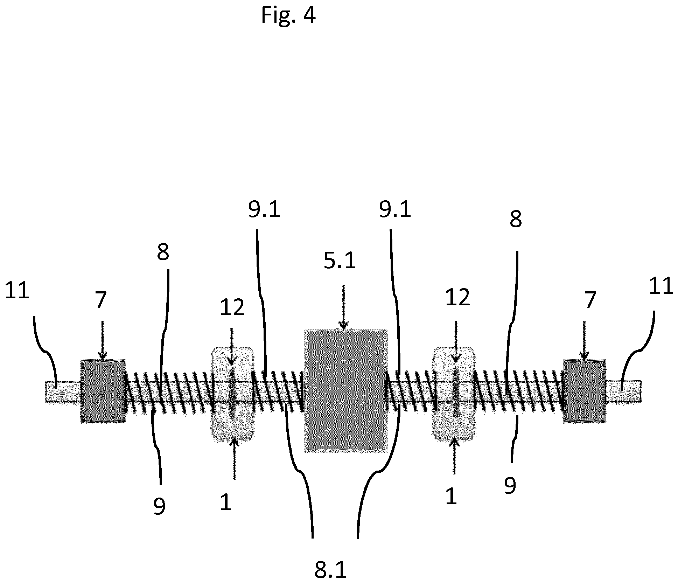

Figure 4 shows a schematic drawing of the settings of Figures 2 and 3 after the aseptic welding process has been completed. In detail, the new filter (5.1) is in place, welding seams (12) connecting the new weldable tubing (8.1) with the weldable tubing (8) are secured with pressure resistant shells (1). The springs (9) and (9.1) respectively, cover and thereby secure the new weldable tubing (8.1) and the weldable tubing (8).
Figure 5 depicts a schematic drawing of a barblock device of Saint-Gobain performance Plastic. In detail Fig. 5a) depicts the two components "sleeve" and "collet" whereas Fig. 5b) shows how the sleeve and the collet of the barblock device are used to secure a welded seam (12).
Figure 6 depicts a schematic drawing of a fluid filled, pathogen reduced, closed and ideally bubble free chromatography assembly (13) after aseptic welding. In detail the chromatography column (15) was exchanged via aseptic welding (pressure resistant shells, spring and welding seams not shown) after securing the fluid filled part of the chromatography assembly with pinch valves (16). The pinch valves ensured that no fluid left the system and no gas bubbles entered the system. Following aseptic welding of tubing (8) and prior to removing the pinch valves (16) the bypass path (14) was flushed to remove gas bubbles resulting in a fluid filled, pathogen reduced, closed and ideally bubble free chromatography assembly.

## Claims

1. Pressure resistant shell for stabilizing a welding seam of a weldable tubing, wherein
a) the pressures resistant shell comprises either at least two components **characterized in that** one component comprises a groove and the other an elevation which fits the groove or
b) the pressure resistant shell consists of at least one barblock device that secures a welding seam of a weldable tubing

2. Device according to claim 1 wherein the weldable tubing is an aseptically weldable tubing.

3. Pressure resistant shell according to claim 1 or claim 2 wherein the weldable tubing and/or the aseptically weldable tubing is used at a pressure of between 0-5 bar, preferably 2,5 - 3,5 bar, most preferably 2,8 bar.

4. Pressure resistant shell according to anyone of the preceding claims wherein the weldable tubing and/or the aseptically weldable tubing further comprising at least one spring encasing 90-100% of the tubing when the spring is relaxed and 50-95% of the tubing when the spring is compressed.

5. System for the continuous production of a protein of interest wherein the production system comprises at least one aseptically weldable tubing and as least one pressure resistant shell according to claims 1 -3.

6. Method for using a production system according to claim 5, wherein the method comprises the step that during assembly of the production system at least one spring is placed onto a weldable tubing which is to be welded aseptically during production of the protein of interest.

7. Use of at least one pressure resistant shell consisting of a barblock device for securing a welding seam of a weldable tubing.
